# EUROPEAN PATENT APPLICATION

(11) **EP 4 253 893 A1**
(43) Date of publication of application: **04.10.2023**
(21) Application number: 22165717.4
(22) Date of filing: 30.03.2022
(51) Int. Cl.: F28D 20/00, H05B 6/10, F24H 9/1818

(54) **A DEVICE FOR STORAGE OF PHOTOVOLTAIC ENERGY AND A METHOD FOR STORAGE OF PHOTOVOLTAIC ENERGY USING THE SAID DEVICE**

(71) Applicant: Ravljen, Uros, 3330 Mozirje (SI)
(72) Inventor: Ravljen, Uros, 3330 Mozirje (SI)
(74) Representative: Patentni Biro AF d.o.o.

(57) **Abstract**

The invention belongs to the field of energy, more precisely to the field of storage of photovoltaic energy in the form of heat energy. The present invention relates to a device for storage of photovoltaic energy and a method for storage of photovoltaic energy using the said device. The device according to the invention comprises:
- a tank for storing a non-flammable heat storing material, said tank preferably being insulated,
- A connection arranged to connect at least one photovoltaic panel and an induction coil, wherein the induction coil is powered directly with the current generated by the photovoltaic panel,
- A metal, preferably iron plate installed inside the said tank,
- the induction coil, preferably a spiral or a helical coil, installed in the bottom of the said tank, wherein the induction coil is arranged to heat the said metal plate inside the tank and wherein the so heated metal plate is arranged to heat the material inside the tank in order to store the generated electric current as heat.

## Description

### Field of the invention

The invention belongs to the field of energy, more precisely to the field of storage of photovoltaic energy in the form of heat energy. The present invention relates to a device for storage of photovoltaic energy and a method for storage of photovoltaic energy using the said device.

### Background of the invention and the technical problem

Photovoltaics is a term describing the conversion of light into electricity using semiconducting materials that exhibit the photovoltaic effect, which is commercially utilized for electricity generation. These systems use solar panels with solar cells, which generate electrical power. Photovoltaic systems for electrical power generation may be ground-mounted, rooftop-mounted, wall-mounted or floating. Although solar-derived electricity appears to be more environmentally friendly than some other electricity-generating sources, there are some disadvantages mostly related to the costs, to inexistent recycling solar panels at the end of their lifespan of 10 to 30 years, and to unstable power generation. Due to the latter, having solar power in the supply mix with other conventional power supplies requires regulation of power distribution in demand peaks in order to prevent potential undersupply.

In case of sunny weather, solar systems generate surplus energy, thus storage of this excess energy is essential to getting the most out of any solar panel system. In essence, energy storage allows an energy reservoir to be charged when generation is high and demand is low, then released when generation diminishes and demand grows. Furthermore, efficient storage may result in cost-savings, more efficient energy grids, and decreased fossil fuel emissions.

According to known solutions, solar energy storage is divided into three different categories: thermal, battery, and mechanical.

Thermal energy storage uses various mediums, such as water or molten salt, to absorb and retain heat from the sun. This heated medium is stored in an insulated tank until the energy is needed, usually to boil water for energy generation.

On the other hand, solar energy can also be stored in electrochemical batteries. When solar energy is pumped into a battery, a chemical reaction among the battery components stores the energy. The reaction is reversed when the battery is discharged, allowing current to exit the battery. Lithium-ion batteries are most commonly used in solar applications.

Lastly, mechanical energy storage takes advantage of the potential energy of an object to generate electricity, wherein the surplus electrical power is converted into mechanical power, which is converted back into electricity for later use. This can be achieved in different ways, such as using a flywheel, pumped hydro or compressed air.

For photovoltaic systems installed in homes, battery storage is most cost-effective and efficient way to store solar energy and lithium-ion batteries are mostly used. However, there is a need to design other alternative devices that will also enable efficient and reliable storage of solar power. Therefore, the technical problem, which is solved by the present invention, is construction of a device and a method for thermal storage of solar power.

### Prior art

Article "A Comprehensive Review of Thermal Energy Storage" (Sustainability 2018, 10, 191; doi:10.3390/su10010191) discusses thermal energy storage (TES), which is a technology that stocks thermal energy by heating or cooling a storage medium so that the stored energy can be used at a later time for heating and cooling applications and power generation. Heat storage technologies, such as water tank, underground, and packed-bed storage methods, are described and commented. Additionally, latent-heat storage systems associated with phase-change materials for use in solar heating/cooling of buildings, solar water heating, heat-pump systems, and concentrating solar power plants as well as thermo-chemical storage are discussed. Finally, cool thermal energy storage is also briefly reviewed and outstanding information on the performance and costs of TES systems are included. The present invention, however, differs form all these discussed and known options.

The closest solution is described in patent application US20140366536A1, which relates to a grid-tied thermal energy storage system comprising:
- a heat storage material;
- a heat transfer material in thermal communication with a source of concentrated solar flux and further in thermal communication with the heat storage material providing for the heat storage material to be selectively heated or cooled through heat exchange with the heat transfer material; and
- an electric heating element in thermal communication with the heat storage material providing for the heat storage material to be selectively heated by applying electric power to the electric heating element.

The heat storage material comprises a metal and the electric heating element comprises an induction heater. Said induction is wound around the tank, in which the heat storage material is stored. This has some disadvantages mainly related to loss of temperature, as primarily the tank is heated.

### Description of the solution to the technical problem

The purpose of the invention is to design a device for thermal storage of solar power generated by a photovoltaic system, wherein the device will be easy to operate, maintain and will use eco-friendly materials as much as possible. A further aim of the invention is to address the disadvantages of known solutions and to improve efficiency of heat storage.

The device according to the invention comprises:
- a tank for storing a non-flammable heat storing material, said tank preferably being insulated,
- a connection, arranged to connect at least one photovoltaic panel and an induction coil, wherein said induction is powered directly with the current generated by the photovoltaic panel, wherein the connection is an insulated wire or a cable of suitable diameter with regards to the power of photovoltaic panel(s) and the induction,
- a metal plate made from ferromagnetic material, preferably an iron plate, installed inside the said tank, preferably at its bottom,
- and said induction coil, preferably shaped as a flat spiral coil or as a helical coil, installed in the bottom of the said tank, wherein the induction coil is arranged to heat the said metal plate inside the tank and wherein the so heated metal plate is arranged to heat the non-flammable heat storing material inside the tank in order to store the generated electric current as heat.

The induction coil in any shape such as flat spiral coil or helical coil is powered directly with photovoltaic direct current, without using DC/AC inverters.

As the induction coil is installed in the bottom and heats the metal plate directly, there is no unnecessary heat loss, because the heat storing material is being heated directly. This differs from the known solution in US20140366536 where the induction heats the tank itself and the tank then transfers the heat onto the heat storage material inside it. An additional advantage of the present solution is in that the induction is installed through an opening, hence maintenance related to induction coil replacement and electronics is much easier, wherein the heat storing material does not have to be removed from the tank in order to repair the device according to the invention.

The non-flammable, high-temperature material may be any suitable material, preferably liquid or fluid, wherein such fluids are well known to the person skilled in the art. The preferred option is water based, non-toxic, high-temperature and non-flammable fluid, such as potassium formate and water. Also suitable are suitable salts dissolved in water, which increase the temperature of boiling. Some further examples of suitable liquids are HC-50, HC-40, HC-30, HC-20, HC-10 produced and sold by the company Dynalene (https://www.dynalene.com/fluid-selection-guide/).

The photovoltaic direct current is connected to an insertable electronics box, which powers the flat induction coil. Suitable electronics are selected with regards to the panels, induction and required power, which is known to the skilled person. The panels and electronic box are connected with suitable wires or cables, while a circuit breaker should also be present for allowing disconnection of panels, which improves safety and ease of maintenance.

The coil is inserted into the opening at the base which heats up the ferromagnetic iron disc. In case the coil is flat spiral coil, the base is thinner, while in case the coil is helical the base (bottom) is shaped as a hollow cylinder, in which the helical coil is inserted. The disc is placed at the bottom of the heat storage with spacers, so the disc does not touch the bottom in order to prevent losses as the bottom does not absorb heat from the disc. Such bottom must be made with non-ferromagnetic material, so it does not absorb induction. The spacers may be present in any form, any arrangement and in any number, while thy are made from a non-ferromagnetic material.

The dimensions of the tank may be any suitable depending on the planned use. Because of the big temperature range and the fluid volume, the heat-storage material in the tank is not under pressure and the tank is also provided with an air space and safety valve for regulating pressure inside the tank and optional letting air in or out in case of not suitable pressure or vacuum. Alternatively, instead of the air space a suitable expansion tank may be provided, wherein said expansion tank is suitably connected to the tank for storing the non-flammable heat storing material.

The device for thermal storage of solar power generated by a photovoltaic system may be further connected to a second tank, from which any heating system is heated, such as floor heating, radiators, etc. This is preferred in situations when the temperature of the heat-storing material inside the tank of the device exceeds for example 200 °C. Thus, the device is via heat exchangers connected to the second tank comprising water than can be heated by the device.

A preferred embodiment of the device comprises a thermostat intended to measure the temperature of the heat-storing material inside the tank. In case of excess heating, the device may further comprise cooling means, such as cooling ribs or ventilators, in order to allow cooling of electronics.

The electric energy produced by photovoltaic panels can be stored as heat using the device according to the invention without the need to use or incorporate inverters, MPPT or PWM controllers and/or batteries.

The method for storage of photovoltaic energy using the above-described device comprises the following steps:
a) Solar panels produce electric energy,
b) The electric energy produced in step a) is used to power the induction coil installed in the bottom of the tank with the non-flammable high-temperature material,
c) The induction coil heats the metal plate inside the tank,
d) The heated metal plate heats the material inside the tank, preferably up to 200°C, wherein the temperature of the material is preferably measured with a suitable thermostat or similar device,
e) In the previous steps generated heat is used to heat a second tank for heating a house or any other space or for heating water, wherein the transfer of the heat is achieved with heat exchangers.

The temperature for heating a house or any other space may be around 30°C for underfloor heating, around 60°C for radiators, etc.

The invention will be further described on the basis of exemplary embodiments and figures, which show:
- Figure 1: a device according to a possible embodiment
- Figure 2: a side view of the heat storage tank
- Figure 3: a top view of the flat spiral induction coil with the electric box
- Figure 4a: A side view in cross-section of the heat storage tank with a helical coil
- Figure 4b: Side view of the helical coil

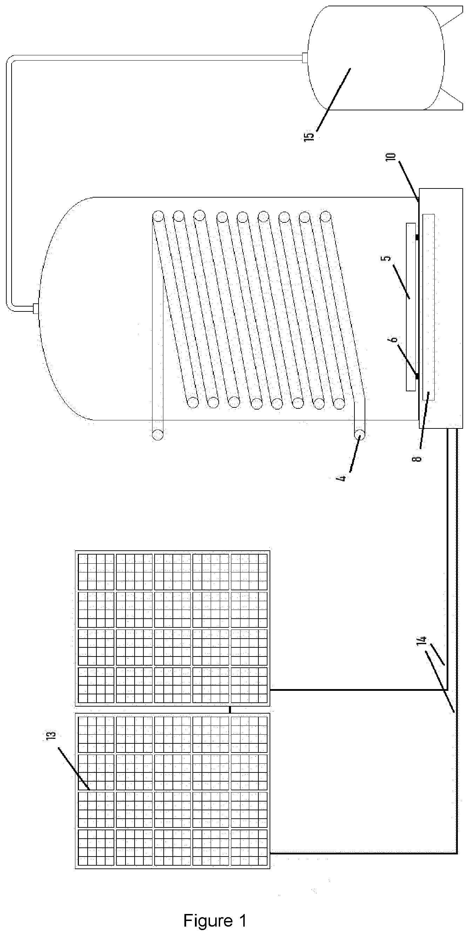

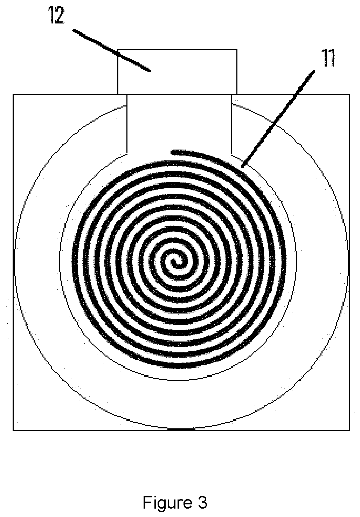

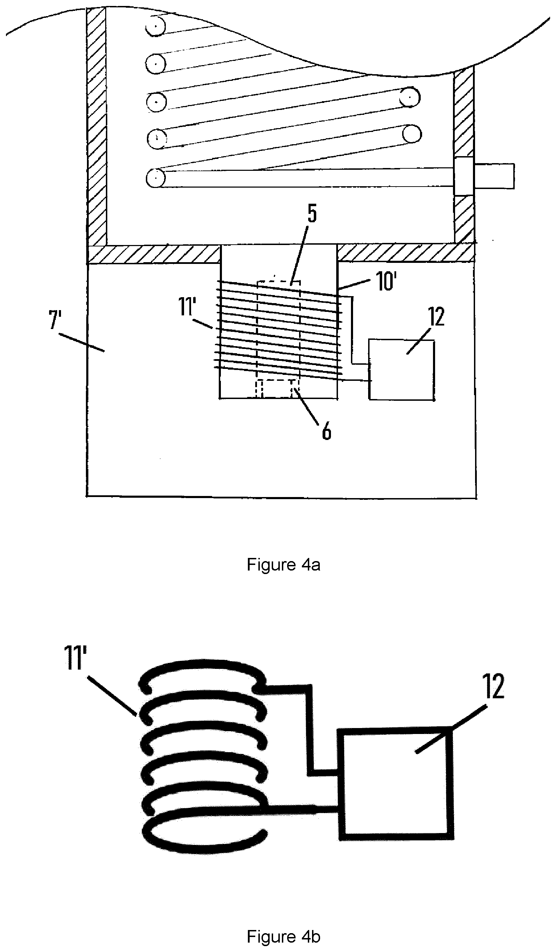

Figure 1 shows a combination of photovoltaic panels 13 and the device according to a possible embodiment, which comprises:
- a tank T for storing a non-flammable heat storing material 1, said tank preferably being insulated,
- insulated wire or cables 14 arranged to connect at least one photovoltaic panel 13 and an induction coil 11, wherein said induction is powered directly with the current generated by the photovoltaic panel,
- an iron plate or disc 5, installed inside the said tank in its bottom 10,
- the induction coil 11 shown in figures 3 and 4, installed in the bottom 10 of the said tank, wherein the induction coil 11 is arranged to heat the said iron plate 5 inside the tank and wherein the so heated metal plate 5 is arranged to heat the material 1 inside the tank in order to store the generated electric current as heat.

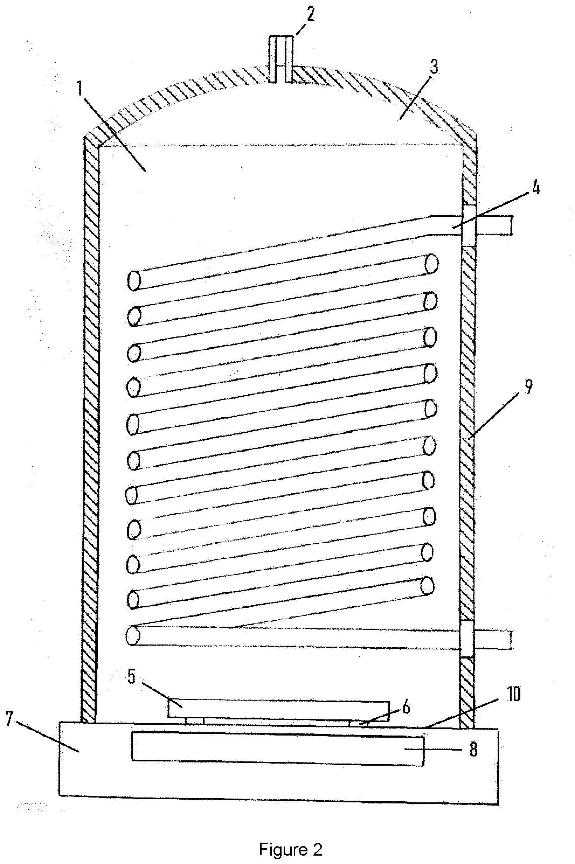

Figure 2 shows particulars of the tank filled with the heat-storage material 1, provided with heat exchangers 4 and the bottom 10, inside which an opening 8 at a base 7 is provided, said induction coil being placed in the said opening 8. The iron disc 5 is placed above the induction and spaced from it with suitable spacers 6.

The heat-storage material in the tank is filled up to the highest point to form air space 3 and is not under pressure. A safety valve 2 is provided for regulating pressure inside the tank and optional letting air in or out in case of not suitable pressure or vacuum.

As shown in figure 3 the induction coil 11 is connected to the electronics box 12. Said electronics are used for converting direct current to a high-frequency alternating current through the coil in order to ensure operation of the induction. The panels and electronic box are connected with suitable wires or cables, while a circuit breaker should also be present for allowing disconnection of panels, which improves safety and ease of maintenance.

An alternative design of the induction 11 is a helical coil 11' as shown in figures 4a and 4b. In this second embodiment the base is higher 7' and the opening 8' is deeper in order to allow receiving of the spiral 11'. The bottom 10' is shaped as a cylinder arranged to receive the helical coil 11'. All other components of the device remain the same as in the first embodiment described above.

## Claims

1. A device for storage of photovoltaic energy comprising:
- a tank (T) for storing a non-flammable heat storing material (1),
- a connection (14), arranged to connect at least one photovoltaic panel (13) and an induction coil (11, 11'), wherein said induction coil (11, 11') is powered directly with the current generated by the photovoltaic panel (13), wherein the connection (14) is an insulated wire or a cable of suitable diameter with regards to the power of photovoltaic panel(s) and the induction,
- a metal plate (5) made from ferromagnetic material installed inside the said tank, preferably at its bottom (10),
- the induction coil (11, 11') installed in the non-ferromagnetic bottom (10) of the said tank (T), wherein the induction coil is arranged to heat the said metal plate inside the tank and wherein the so heated metal plate is arranged to heat the non-flammable heat storing material inside the tank in order to store the generated electric current as heat.

2. The device for storage of photovoltaic energy according to claim 1, wherein the induction coil is shaped as a flat spiral coil or as a helical coil.

3. The device for storage of photovoltaic energy according to claim 1 or claim 2, wherein said tank is insulated.

4. The device for storage of photovoltaic energy according to any of the preceding claims, wherein the non-flammable, high-temperature material may be any suitable liquid or fluid material, preferably water based, non-toxic, high-temperature and non-flammable fluid, such as potassium formate and water or salts dissolved in water.

5. The device for storage of photovoltaic energy according to any of the preceding claims, wherein the device is provided with an insertable electronics box (12) arranged to power the induction coil (11, 11') and wherein the photovoltaic direct current is connected to said insertable electronics box (12) with suitable wires or cables, while a circuit breaker should also be present for allowing disconnection of panels.

6. The device for storage of photovoltaic energy according to any of the preceding claims, wherein the ferromagnetic plate (5) is an iron plate.

7. The device for storage of photovoltaic energy according to any of the preceding claims, wherein the coil is flat spiral coil and the base (7) is provided with an opening (8) arranged to receive the coil (11).

8. The device for storage of photovoltaic energy according to any of the preceding claims from 1 to 6, wherein the coil is helical (11') and the bottom (10') is shaped as a hollow cylinder, in which the helical coil (11') is inserted.

9. The device for storage of photovoltaic energy according to any of the preceding claims, wherein the ferromagnetic plate (5) is placed at the bottom of the heat storage with non-ferromagnetic spacers (6), so the disc (5) does not touch the bottom (10), wherein the spacers (6) may be present in any form, any arrangement and in any number.

10. The device for storage of photovoltaic energy according to any of the preceding claims, wherein the tank (T) is also provided with an air space (3) and safety valve (2) for regulating pressure inside the tank and optional letting air in or out in case of not suitable pressure or vacuum.

11. The device for storage of photovoltaic energy according to any of the preceding claims from 1 to 9, wherein a suitable expansion tank (15) is connected to the tank (T) for storing the non-flammable heat storing material.

12. The device for storage of photovoltaic energy according to any of the preceding claims, wherein the device is further connected to a second tank, from which any heating system is heated, such as floor heating, radiators, etc.

13. The device for storage of photovoltaic energy according to any of the preceding claims, wherein the device comprises a thermostat intended to measure the temperature of the heat-storing material inside the tank.

14. The device for storage of photovoltaic energy according to any of the preceding claims, wherein the device comprises cooling means, such as cooling ribs or ventilators, in order to allow cooling of electronics.

15. A method for storage of photovoltaic energy using the device according to any of the preceding claim, **characterized in that** the method comprises the following steps:
- Solar panels produce electric energy,
- The electric energy produced in step a) is used to power the induction coil installed in the bottom of the tank with the non-flammable high-temperature material,
- The induction coil heats the metal plate inside the tank,
- The heated metal plate heats the material inside the tank, preferably up to 200°C, wherein the temperature of the material is preferably measured with a suitable thermostat or similar device,
- In the previous steps generated heat is used to heat a second tank for heating a house or any other space or for heating water, wherein the transfer of the heat is achieved with heat exchangers.
